# EUROPEAN PATENT SPECIFICATION

(11) **EP 3 536 830 B1**
(45) Date of publication and mention of the grant of the patent: **24.04.2024**
(21) Application number: 19161514.5
(22) Date of filing: 08.03.2019
(51) Int. Cl.: D01F 1/10, C08L 89/06, C08K 7/02

(54) **PROCESS FOR PRODUCING LEATHER-LIKE MATERIAL AND MATERIAL OBTAINABLE THEREBY**
VERFAHREN ZUR HERSTELLUNG VON LEDERÄHNLICHEN STOFF SOWIE DADURCH ERHÄLTLICHER LEDERÄHNLICHER STOFF
PROCÉDÉ DE PRODUCTION D'UN MATÉRIAU SIMILICUIR ET MATÉRIAU SIMILICUIR AINSI OBTAINABLE

(30) Priority: 09.03.2018 IT 201800003401
(43) Date of publication of application: 11.09.2019
(73) Proprietor: Conceria Lufran S.r.l., 50121 Firenze (IT); Università di Pisa, 56126 Pisa (IT)
(72) Inventor: DONATI, Franco, I-56029 SANTA CROCE SULL'ARNO (Pisa) (IT); PUCCINI, Monica, I-56023 CASCINA (Pisa) (IT); VITOLO, Sandra, I-56125 PISA (IT)
(74) Representative: Aseglio-Gianinet, Romina

(56) References cited:
- EP-A1- 2 153 976
- WO-A1-90/00184
- WO-A1-2016/035021
- DE-A1-102008 017 960
- DATABASE WPI Week 198832 Thomson Scientific, London, GB; AN 1988-224347 XP002786017, -& JP S63 159513 A (AIN ENG KK) 2 July 1988 (1988-07-02)

## Description

The present invention relates to the enhancement of so-called "secondary raw materials", or the enhancement of material otherwise considered waste, through reuse in production processes.

In particular, the leather production chain produces a variety of scraps, the disposal of which entails considerable costs from both an economic and an environmental point of view.

WO 90/00184 A1 describes a process for the production of a composite material using a mixture of thermoplastic material, rubber or leather scraps and one or more surfactants.

EP 2 153 976 A1 describes a multi-layer profile which may be used as a component of furniture and at least one layer of which comprises leather scraps.

DE 10 2008 017 960 A1 describes a process for the production of a composite material using a mixture of thermoplastic polymer and leather scraps wherein the quantity of such scraps is clearly predominant.

JP 2008 087247 A describes a process for producing a composite material by injection-molding a mixture of thermoplastic polymer and pulverized leather scraps.

One object of the present invention is to provide a process for the profitable re-use of such scraps, in particular by making it possible to obtain a material which may be effectively classified as "leather-like".

According to the invention, this object is achieved through a process for the production of a leather-like material having the features indicated in the following claim 1. Preferred features of such a process are indicated in claims dependent on the aforesaid claim 1.

In particular, the process of the invention makes it possible to obtain a material with a homogeneous and uniform structure, which has good breathability, as well as an adequate flexibility and resistance to mechanical stresses and atmospheric agents, making it a valid and economical substitute for conventional leather.

Below are listed - divided by stage of the production cycle wherein they are generated - the scraps that are currently generated in the entire leather production chain and that may be used advantageously in the process of the invention instead of resorting to the processes of disposal or reuse conventionally used:

### Skinning

• Offcuts of raw leather, taken from external parts of the same leather and not usable, such as tail, legs, and small outer flaps. Currently, if it is a question of certified material, they are reused for the production of gelatin also for food use, otherwise as fertilizers after specific hydrolytic treatment;

### Tanning

- Offcuts of raw leather, resulting from any sectioning operations of the leather. Currently, if it is a question of certified material, they are reused for the production of gelatin also for food use, otherwise as fertilizers after specific hydrolytic treatment;
- Fleshing scraps, mechanically removed from the inner surface of the hide, i.e. the connective tissue connecting the same hide to the body of the animal, which is structurally non-homogenous and non-fibrous. Currently, they are reused as fertilizers and fats after specific hydrolytic treatment;
- Splitting scraps, chemically similar to fleshing scraps, but more fibrous and with a larger surface area, although too small and too thin to be processed. At present, in the case of splitting hides with particularly large surface area, the scraps (split) obtained may have sufficient thickness and surface area to be tanned (sueded). In all the other cases, if it is a question of certified material, they are reusable for the production of gelatin for human use, otherwise as fertilizers and fats after specific hydrolytic treatment;
- Tanned splitting scraps, from which are obtained both parts suitable to be processed to obtain "crusts", and parts with insufficient surface or thickness and therefore cannot be processed. Currently, they are reused, after hydrolysis or roasting to obtain fertilizers;
- Thinning residues, leather dust that is produced in the thinning process of the hides, aimed at making them of a uniform thickness. Currently, they are reused, after hydrolysis or roasting, to obtain fertilizers. Thinning dust is also used to obtain materials that do not have any fibrous structure (salpa);
- Polishing dust, i.e. an operation carried out for different purposes both on the outer side of the leather (grain) and on the inner side (split). Currently, they are reused in the same way as thinning scraps;
- Scraps from shearing (i.e. a process that may be carried out in different parts of the tanning process) on finished or semi-finished leather, i.e. the outer parts of the leather that, for various reasons, may not be used for the production of manufactured products. At present, the possibilities of reuse are minimal, since the scraps are small in surface area and extremely irregular. Chemically much more stable than all previous scraps, they are mainly disposed of in landfills;
- Hides or parts of hide that cannot be processed, that is, due to some defect (scratches, cuts, stains), they may not be used to manufacture an object and may come from both finished and semi-finished leather. At present, the possibilities of reuse are minimal, so they are mainly disposed of in landfills;

### Leather manufacturing

- Scraps from cutting leather, i.e. all that remains of the finished leather after the operations of cutting the pieces intended for the production of manufactured products, which - depending on the intended use of the leather - may represent up to 30% of the entire surface area produced, as in the case of leathers for the automotive and leather goods sectors, or to a lesser extend in the case of leather for footwear. At present, the possibilities of reuse are minimal, so they are mainly disposed of in landfills;
- Manufacturing scraps, which are produced by the various machines that are used to create a leather item for any purpose. At present, the possibilities of reuse are minimal, so they are mainly disposed of in landfills;
- Defective leather goods, which are not suitable to be placed on the market. They are currently shredded and disposed of in landfills;
- Parts of manufactured leather products that have reached the end of their life cycle. They are currently shredded and disposed of in landfills.

In the first step of the process of the invention, the scraps are reduced to fibers, preferably between 0.1 and 5 mm in length. The fibers are obtained by mechanical means, without causing a degradation of the collagen that comprises them due to the use of chemical or thermal means: for example, such mechanical means are in continuous operation, and comprise a feeding hopper, an element with abrasive/grating action and a system for collecting the fibers produced. The hopper and/or the abrasive/grating element are advantageously movable according to a reciprocating rectilinear motion, so as to abrade/grate the scrap and produce the aforesaid fibers. Such a method of operation has proven to be more suitable for obtaining a final leather-like material with the desired properties than the use of rotating grinding means.

During the mixing step of the process of the invention, the fibers may be mixed with any additives present, optionally under heat. The additives may also be mixed with the fibers and the mixture heated. Preferably, a granulate is produced initially, which may then be mixed with additional additives and processed into a product shaped by applying heat.

In principle, the hot step of the process of the invention may be conducted in any machinery conventionally used for processing plastic materials, for example, machines for compression molding, injection molding, extrusion, co-extrusion, bubble extrusion, cast extrusion, additive manufacturing and vacuum molding, so as to produce a material in the form of films, bags, sacks, foams, tubes, bars, granules or powders of laminated film. The temperatures used during this step allow the mixture to flow and be handled, without altering the essential qualities of the components thereof.

Specifically, the hot step is conducted in a twin-screw extruder. As is well known, extrusion is a plastic deformation process, which involves feeding through a hopper the granular or powdered material to be treated in the initial section of a heated cylinder containing one or more rotating screws with an axis parallel to the longitudinal axis of the cylinder. Through the thrust of the screws, the molten material advances along the cylinder and finally comes out through a die of desired geometry in the end section of the cylinder.

In an extruder, typically four operating zones arranged in series may be defined, each of which performs a different function and helps to determine the features of the extruded product. These areas are therefore: a solid transport zone; a melting zone; a molten material transport zone; and a forming zone in the die.

The granular or powdered solid material just introduced into the cylinder must not melt, but flow to allow a continuously flowing feed along the longitudinal axis of the extruder. The melting zone is between the point wherein the incipient melting occurs and the point wherein all the material found in a cross-section of the cylinder is melted. During the transport of the solid, first the polymer that is found radially outside in contact with the wall of the cylinder melts, and then the melting proceeds inwards until it affects the material in contact with the screw(s). In the final section, the material is completely melted, and the extruder simply functions as a pump. The molten material is pushed towards the end section of the extruder, ensuring a pressure that pushes it through the die, the form of which gives it a desired shape.

Preferably, in the process of the invention, the aforesaid screws are co-rotating and rotate at a speed between 10 and 60 rpm.

Advantageously, the extruder used has a length between 19 and 36 times the external diameter of the screws and is maintained at a temperature between 80 and 220 °C. Of course, the temperature may vary within the range indicated above, proceeding along the longitudinal axis of the extruder.

In the mixture of the process of the invention, plasticizers may be present in a concentration between 0.5% and 40% by weight, and more preferably between 0.5% and 25% by weight, preferably between 1.0% and 15% by weight or between 1.0% and 10% by weight, on the basis of the total weight of the mixture.

Thermoplastic polymers are preferably chosen from the group consisting of polyolefins, such as polyethylene or polypropylenes, cyclic olefin polymers and copolymers, polyvinyl chloride, polysulfones, polyurethanes, polybutylene terephthalate, partially hydrolyzed poly(vinyl acetate) and poly(vinyl acetate), polyether ether ketone, thermoplastic elastomers, polystyrenes; polyesters, polyamides, polyesteramides, poly(anhydrous starch); polyimides, polyacrylates, alkylene/acrylic acid copolymers or alkylene/methacrylic acid copolymers, preferably ethylene/acrylic acid copolymers; alkylene/maleic anhydride copolymers; alkylene/vinyl alcohol copolymers, acrylonitrile butadiene styrene, polycarbonates, polyhydroxyalkanoates, collagen, elastin, hydrogel, xerogel, polycaprolactone, poly(DL-lactide-co-glycolide), polylactide, poly(lactide -co-caprolactone), and the copolymers or combinations thereof.

Biodegradable polymers are preferred, and in particular biodegradable polyamides, polyester amides and poly(amido anhydrides), ethylene/acrylic acid copolymers and ethylene/vinyl alcohol copolymers. The preferred biodegradable thermoplastic polyesters are polymers derived from aliphatic hydroxycarbonic acids with 1 to 24 carbon atoms, which for example are obtained from the corresponding hydroxycarbonic acids or from the corresponding lactones or lactides. The preparation of these polyesters is well known. These preferred thermoplastic polyesters are preferably homopolymers, derived from alpha-hydroxycarbonic acids such as polyglycolic acids; homopolymers obtained from lactic acid or from the corresponding lactide; or from beta-hydroxycarbonic acids, preferably from beta-hydroxypropionic acid, and respectively beta-propiolactone or beta-hydroxybutyric acid (poly-beta-hydroxy-butyrate); from gamma-hydroxycarbonic acids, e.g. gamma-hydroxybutyric acid and respectively gamma-butyrolactone and gamma-valerolactone; from carbonic epsilon-hydroxy acids, such as 6-hydroxycarbonic acid and respectively from the corresponding epsilon-caprolactone which generates poly-epsilon-caprolactone. Polymers consisting of lactic acid, gamma-hydroxy-butyric acid, gamma-valerolactone and epsilon-caprolactone are preferred. Poly-epsilon-caprolactone is preferred.

Preferred thermoplastic copolymers are polyhydroxy butyrate/valerate, as well as copolymers obtained from bihydroxy carbonic acids as mentioned in the preceding paragraph with aliphatic or aromatic diisocyanates, such as hexamethylene diisocyanate. Other copolymers are known and may be used as needed. Block copolymers containing one of the hydroxycarbonic acids may also be used, such as beta-hydroxybutyrate.

Suitable biodegradable polymers are natural or synthetic thermoplastic polymers comprising a polyhydroxyalcanoate, such as a polyhydroxybutyrate (PHB) or a copolymer such as a polyhydroxybutyrate-valerate (PHBV), a polyalkylene ester, a polylactic acid (PLA), a polylactide (PLLA), a poly-epsilon-caprolactone (PCL), a polyvinyl ester, a polyvinyl alcohol and mixtures thereof.

Plasticizers include, for example, poly(alkylene oxides), preferably poly(ethylene glycols) or polypropylene glycols), ethylene glycol, propylene glycol, sorbitol, glycerol, butanediol, low molecular weight glycerin, glycerol monoacetate, diacetate or triacetate; urea; pentaerythritol, triethyl citrate, tributyl citrate, acetyl tributyl citrate, fatty alcohols such as stearyl alcohol and other known plasticizers, which are present at a concentration between 0.5% and 40% by weight, and more preferably between 0.5% and 25% by weight preferably between 1.0% and 15% by weight or between 1.0% and 10% by weight based on the total weight of the mixture.

Suitable fillers comprise, for example, magnesium, silicon and aluminum oxides, chitosan, cellulose fibers, cellulose esters, cellulose ethers, starch esters, starch ethers, hydroxyalkyl cellulose, hydroxy alkyl starch, ceramic powder. These fillers may be present in a concentration of 3-50% by weight, preferably 5-30% by weight, preferably 5-15% by weight, depending on the total weight of the mixture.

A lubricant may be added to the mixture in an effective quantity when the composition of the invention is shaped into the desired solid article, for example for aiding in the release from the mold. Water insoluble lubricants may also increase the water resistance of solid-form articles of the invention. Examples of suitable lubricants that may be used in compositions comprise, but are not limited to, compounds known to the person skilled in the art such as aluminum or magnesium stearates, lecithins and mono- and diglycerides, soybean oil, rapeseed oil, sunflower oil, palm oil, phospholipids such as lecithin, mono- and diglycerides of fatty acids, preferably saturated fatty acids; vegetable oils, preferably hydrogenated, derived with phosphoric acid, polyhydroxyl compound esters, animal lipids, preferably hydrogenated, to prevent oxidation, mineral oils and similar oils and mixtures thereof.

The coloring agents that may be used in the mixture are preferably known to be biodegradable and are used in known concentrations.

Foaming agents are suitable for use in the mixture of the process of the invention. A blowing agent may be added to the aforesaid mixture to form low expansion ratio solid expanded articles. Water may act as the primary blowing agent, but physical and chemical blowing agents are preferably used as auxiliary blowing agents. Physical blowing agents include, but are not limited to, inert gases such as nitrogen, carbon dioxide or rare gases; and agents that are liquid at room temperature and have low boiling points, such as alcohols such as ethanol, 2-propanol, hydrocarbons such as butanes or combinations thereof. Chemical agents include, but are not limited to, ammonium carbonate, sodium hydrogen carbonate, sodium azide and combinations of acids and carbonates known to those skilled in the art. In a particular embodiment, the blowing agent is a compressed gas that is mixed and dispersed in the aforesaid mixture. In a particular embodiment, this agent is carbon dioxide.

The stabilizers that may be used in the mixture are for example known antioxidants, UV absorbers, bactericides or fungicides and are used in known quantities. Preservatives may also be included in the aforesaid mixture. A compatible antimicrobial agent such as a fungicide or a bactericide may also be included in an effective quantity to prevent the growth of microorganisms in the composition of the invention and in the solid object shaped from the composition of the invention. Examples of useful preservatives include, but are not limited to, propionic acid, sorbic acid and the sodium or potassium salts thereof, parabens, benzoic acid and/or benzoates known in the state of the art, acetic acid, vinegar, sodium diacetate, lactic acid and mixtures thereof.

Flame retardants are known per se, which contain phosphorus, sulfur or halogens and may be present in a quantity between 0.1% and 10% by weight, preferably from 1% to 6% by weight, in an absolutely preferred way between 2% and 4% by weight based on the total weight of the mixture. Particularly preferred flame retardants are guanidinium phosphate, ammonium polyphosphate, ethylenediamine polyphosphate (optionally in the presence of disodium orthophosphate), guanidinium sulphate and/or ammonium sulphate. These compounds are present in the mixture in the quantities indicated above.

A leather-like material may be obtained by the process of the invention described above.

Such a material meets the product, performance and eco-toxicological requirements of the industry standards, the parameters of which may be assessed according to the international methods IULTCS (IUP-IUC-IUF). Moreover, it has physical-mechanical properties, such as fibrousness, permeability and breathability, many of which are similar to those of real leather, since the collagen of the material's fibers has not been degraded or pulverized.

Such a material may be further processed through mechanical finishing processes that give it the desired esthetic and product features. In particular, it may be colored on the surface in any possible shade, through the application of dyes or pigments, in combination with polymers that guarantee an excellent chemical bond to the substrate and allow the subsequent finishing operations. Examples of such processes are ironing, printing, lacquering, screen printing, application on the surface of specific films (such as metallic papers or pre-printed papers) and all that is necessary for the development of fashion items as required by the market. The material has the same capacity as leather to undergo these processes, both as such and after any abrasion of its surface to facilitate the chemical coupling of finishing layers.

Once enhanced, the material obtainable by the process of the invention has all the physical and mechanical features to be able to be shaped and assembled into all the various components that make up a final manufactured product.

A feature of the material obtainable by the process of the invention is its breathability, which makes it possible to use it for the creation of a whole series of manufactured products normally made of leather, such as footwear, for which breathability is essential.

When used in leather goods, the material obtainable by the process of the invention exhibits properties of colorfastness to dry and wet rubbing and artificial sweat, colorfastness to light, colorfastness to water drops, abrasion resistance, tear resistance, seam strength, tensile strength, colorfastness to migration into other materials (e.g. PU, PVC, etc.), resistance to extreme weather conditions, resistance to dry and wet flexing, and adhesion to the finish applied thereto.

When used in footwear, the material obtainable by the process of the invention exhibits properties of elongation at break, tear resistance, colorfastness to wet and dry rubbing, artificial sweat, colorfastness to light, colorfastness to water drop, abrasion resistance, color fastness to migration in other materials (e.g. PU, PVC, etc.), resistance to extreme weather conditions, resistance to dry and wet flexing, adhesion to the finish applied and water repellency.

When used in clothing, the material obtainable by the process of the invention exhibits properties of colorfastness to dry and wet rubbing and artificial sweat, colorfastness to perspiration and sweat, colorfastness to light, colorfastness to water drops, abrasion resistance, tear resistance, seam strength, resistance to extreme weather conditions, resistance to dry and wet flexing, adhesion to the finish applied thereto, durability in washing and dry-cleaning.

When used in furniture/upholstery, the material obtainable by the process of the invention exhibits properties of colorfastness to light, abrasion resistance, water resistance, including chlorinated and sea water, cleanability, low flammability, resistance also to extreme weather conditions.

The material obtainable by the process of the invention may also be used advantageously in other sectors such as saddlery, technical articles, construction and automotive components. The material obtainable by the process of the invention further meets the legal requirements relating to the presence of impurities such as hexavalent chromium, chlorophenols (PCP, TeCP, TriCP), prohibited phthalates (BBP, DEHP, DIBP, DBP, DINP, DNOP, DIDP, DnHP, DIPP, DMEP, DIHP, DnPP), total and extractable heavy metals (lead, cadmium, arsenic, antimony, mercury), formaldehyde, aromatic amines, flame retardants (PBB, TRIS, TEPA, pBDE, oBDE, dBDE) short-chain sulfochloroparaffins (SCCP), organostannic compounds (TBT, TBhT, DBT, DOT, MBT, MOT, TeBT, TBTO), perfluorinated compounds (PFOS, PFOA, APFO, PFUnA PFNA), dimethyl fumarate, alkylphenols and ethoxylated alkylphenols (NP, NPEO, OP, OPEO).

Further advantages and features of the present invention will become apparent from the detailed description of the following examples of implementation provided by way of nonlimiting example with reference to the accompanying drawings, wherein:
Figure 1 is a graph that shows the TG curves in nitrogen of the components of mixtures fed to an extruder in the implementation of the process of the invention,
Figures 2 to 4 are respective graphs showing the TG curves of various leather-like materials obtained by the process of the invention, and
Figure 5 shows SEM images of six different leather-like materials obtained by the process of the invention.

### EXAMPLES

Several mixtures have been prepared with the following compositions:

| | |
|---|---|
| 5S1/PU | 5% fibers - 95% polyurethane, |
| 10S1/PU | 10% fibers - 90% polyurethane, |
| 15S1/PU | 15% fibers - 85% polyurethane, |
| 5S3/PU | 5% fibers - 95% polyurethane, |
| 10S3/PU | 10% fibers - 90% polyurethane, |
| 15S3/PU | 15% fibers - 85% polyurethane, |
| 5S1/PCL | 5% fibers - 95% polycaprolactone, |
| 10S1/PCL | 10% fibers - 90% polycaprolactone, |
| 15S1/PCL | 15% fibers - 85% polycaprolactone, |

where S1 indicates fibers obtained from scraps from shearing operations, and S3 indicates fibers obtained from scraps from thinning operations, such operations having been carried out in the leather production chain.

The main characteristics of these fibers are shown in Table I below.

**Table I**

| | Humidity (%) | Organic component (%) | Residue at 900°C |
|---|---|---|---|
| S1 | 12.5 | 81.9 | 5.6 |
| S3 | 31.1 | 61.8 | 7.1 |

The main characteristics of the polyurethane used are as follows:

| | |
|---|---|
| Melting temperature (°C) | 170 |
| MFI_{190°C/8.7kg}(g/10 min) | 15-30 |
| Granule format | pellets of about 3 mm |

The main characteristics of the polycaprolactone used are as follows:

| | |
|---|---|
| Melting temperature (°C) | 58-60 |
| Molecular weight (kDa) | 80 |
| MFI_{190°C/2.16kg}(g/10 min) | 2-4 |
| Granule format | pellets of about 3 mm |

The mixtures described above were respectively fed through a hopper to a Thermo PRISM TSE 16/28mm TC twin-screw extruder equipped with a circular outlet die, from which a filiform product with a diameter of between 0.5 and 2.0 mm was then extruded.

The temperature profile in the various areas of the extruder is shown in Table II below for the two types of polymers used.

**Table II**

| | TS1(°C) | TS2(°C) | TS3(°C) | T_{die}(°C) |
|---|---|---|---|---|
| PU | 170 | 180 | 190 | 180 |
| PCL | 80 | 90 | 100 | 100 |

| | | | | |
|---|---|---|---|---|
| where TS1: Temperature of the first section or transport zone of the solid, TS2: Temperature of the second section or melting zone, TS3: Temperature of the third section or transport zone of the molten material, T_{die}: Extrusion die temperature. | | | | |

The extruded product is a leather-like material, which was then cooled by means of an air system along a path that leads to a winder, which allowed storage in the form of reels of strand. The strand obtained is homogeneous, free of imperfections, flexible and of variable color according to the quantity of fibers used. When desired, the strand was cut into pellets using conventional equipment and processes.

Both the starting and final materials have been characterized by thermogravimetric analysis (TGA), which allows their thermal stability at high temperatures to be assessed.

For this purpose, a respective sample of about 30 mg was placed in a platinum support, subjected to a flow (100 ml/min) of nitrogen and heated from room temperature to 600°C with a heating rate of 10°C/min. The weight variations (TG curves) and the relative speeds (DTG) were recorded continuously as a function of time and temperature. The thermogravimetric analysis of the materials produced was carried out using a TA Instruments Q500 thermobalance.

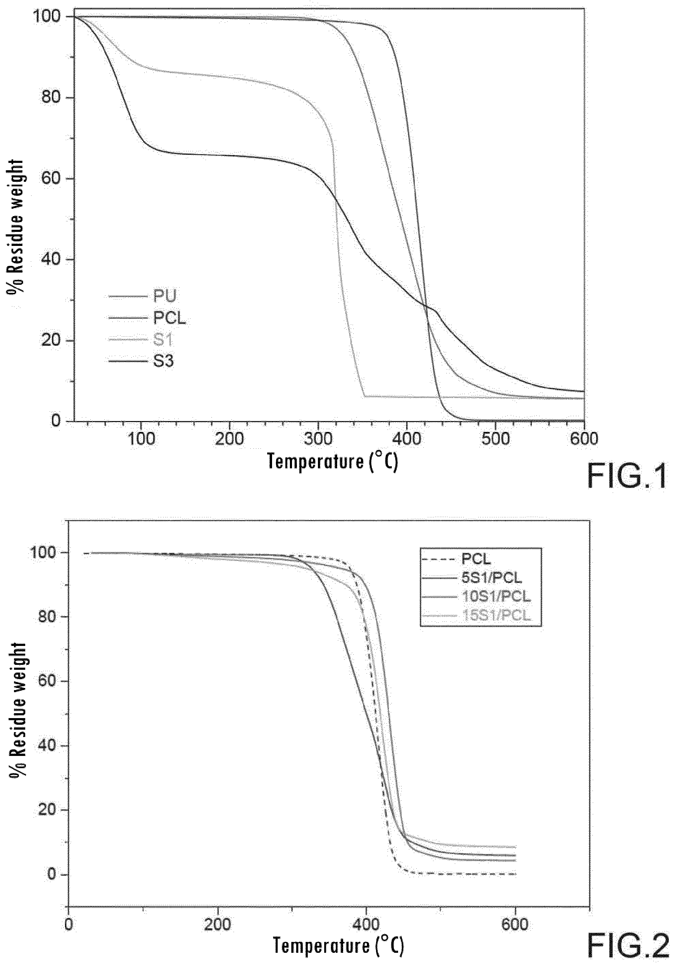

Figure 1 shows that the curves for the biodegradable polymer matrices used both show thermal stability up to 350°C and a single peak of loss in weight at around 420°C for PCL and 390°C for PU, corresponding to the degradation of such polymers.

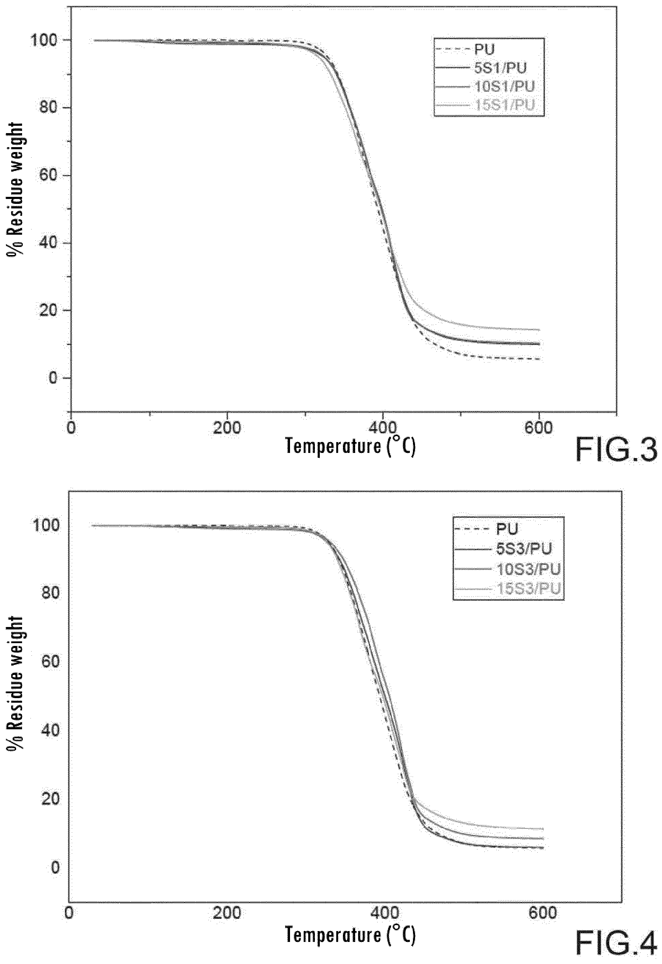

The thermogravimetric analyses carried out on the various leather-like materials obtained are shown in Figures 2, 3 and 4. As it may be seen, the thermal stability of the polymeric matrices remains unchanged even after the addition of fibers up to about 15% in weight. Significant losses in weight due to thermal degradation of the polymeric matrices are found from about 400°C. The final residue increases as the fiber content increases.

The morphology of the obtained leather-like materials was investigated through the SEM analysis of a section obtained through a brittle fracture in liquid nitrogen.

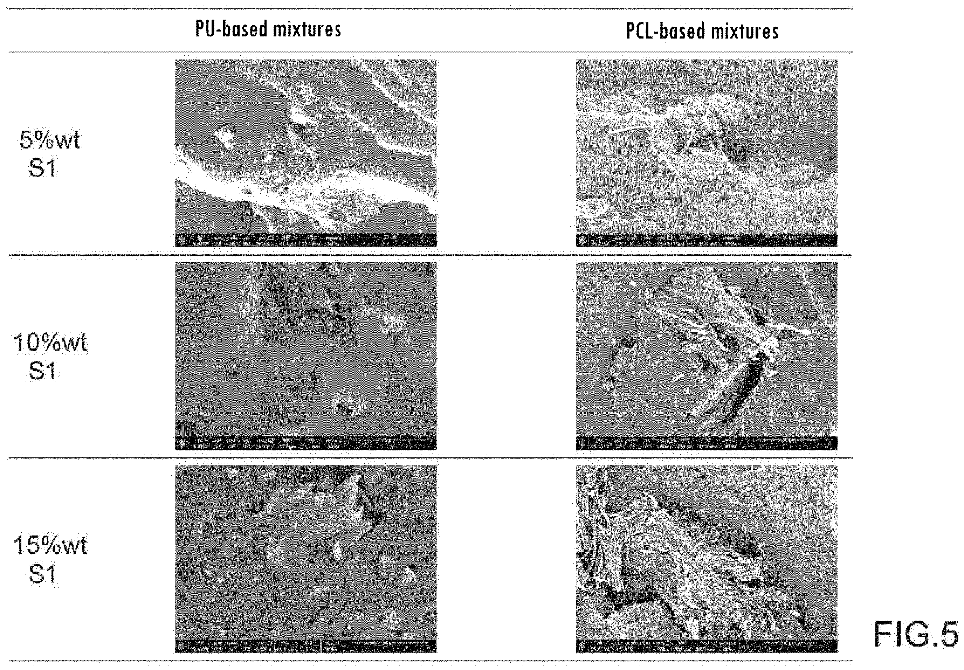

As shown in the images in Figure 5, there is no phase separation between the two components in the mixture, but a homogeneous and uniform structure, in all probability due to the interactions between the fibers and the polymeric matrix, which confirms that the materials thus obtained are suitable to constitute a valid alternative to leathers obtained from the usual raw materials.

Naturally, without altering the principle of the invention, the details of implementation and embodiments may vary widely with respect to those described purely by way of example, without thereby departing from the scope of the invention as defined in the accompanying claims.

## Claims

1. Process for the production of leather-like material from leather production scraps, including the steps of:
- cutting said scraps into fibers by using mechanical means,
- preparing a mixture of a thermoplastic polymer and said fibers, wherein 5 to 70 parts by weight of fibers for 100 parts by weight of thermoplastic polymer are present,
- introducing said mixture into a twin-screw extruder, the end of which has a die,
- heating said mixture in said twin-screw extruder at a temperature between 80 and 220°C, wherein said screws are co-rotating and rotate at a speed between 10 and 60 rpm, so that the thermoplastic polymer is melted and said mixture is extruded through said die, and
- cooling said extruded mixture to room temperature, obtaining the leather-like material.

2. Process according to claim 1, wherein said fibers have a length from 0.1 to 5 mm.

3. Process according to any one of the preceding claims, wherein said mixture further comprises plasticizers, fillers and/or additives, in particular, lubricants, blowing agents, nucleating agents, stabilizers, dyes, pigments and flame retardants.

4. Process according to any one of the preceding claims, wherein said thermoplastic polymer is selected from the group consisting of polyurethanes and polycaprolactones.

5. Process according to any one of the preceding claims, wherein said extruder has a length between 19 and 36 times the external diameter of the screws.

6. Process according to any one of the preceding claims, wherein the step of cutting said scraps into fibers provides for using solely mechanical means, excluding thermal and chemical means.

7. Process according to claim 6, wherein said mechanical means perform a reciprocating rectilinear motion.

8. Process according to any one of the preceding claims, wherein said mixture is free of rubber.

9. Process according to any one of the preceding claims, wherein said mixture further comprises plasticizers in a concentration between 0.5 and 40% by weight, preferably between 1.0 and 10% by weight, based on the total weight of the mixture.

10. Process according to any one of the preceding claims, wherein said die has a circular shape.

11. Process according to claim 10, wherein the diameter of the die is between 0.5 and 2 mm.

## Patentansprüche

1. Verfahren zum Herstellen von lederartigem Material aus Ausschussteilen aus der Lederherstellung, enthaltend die folgenden Schritte:
- Zerschneiden der Ausschussteile in Fasern, unter Verwendung mechanischer Mittel,
- Zubereiten einer Mischung aus einem thermoplastischen Polymer und den Fasern, wobei 5 bis 70 Gewichtsteile an Fasern je 100 Gewichtsteile an thermoplastischem Polymer vorhanden sind,
- Einbringen der Mischung in einen Doppelschneckenextruder, dessen Ende eine Düse aufweist,
- Erhitzen der Mischung in dem Doppelschneckenextruder auf eine Temperatur zwischen 80 und 220°C, wobei die Schnecken gleichsinnig drehend sind und mit einer Geschwindigkeit zwischen 10 und 60 rpm rotieren, so dass das thermoplastische Polymer geschmolzen und die Mischung durch die Düse extrudiert wird, und
- Abkühlen der extrudierten Mischung auf Raumtemperatur, wodurch das lederartige Material erhalten wird.

2. Verfahren nach Anspruch 1, wobei die Fasern eine Länge von 0,1 bis 5 mm haben.

3. Verfahren nach einem der vorangehenden Ansprüche, wobei die Mischung weiter Weichmacher, Füllstoffe und/oder Additive, insbesondere Schmiermittel, Treibmittel, Nukleierungsmittel, Stabilisatoren, Farbstoffe, Pigmente und Flammschutzmittel aufweist.

4. Verfahren nach einem der vorangehenden Ansprüche, wobei das thermoplastische Polymer aus der Gruppe bestehend aus Polyurethanen und Polycaprolactonen ausgewählt ist.

5. Verfahren nach einem der vorangehenden Ansprüche, wobei der Extruder eine Länge zwischen dem 19- und dem 36-Fachen des Außendurchmessers der Schnecken hat.

6. Verfahren nach einem der vorangehenden Ansprüche, wobei der Schritt des Zerschneidens der Ausschussteile in Fasern einzig die Verwendung mechanischer Mittel, ausschließlich thermischer und chemischer Mittel, vorsieht.

7. Verfahren nach Anspruch 6, wobei die mechanischen Mittel eine hin- und hergehende geradlinige Bewegung ausführen.

8. Verfahren nach einem der vorangehenden Ansprüche, wobei die Mischung frei von Gummi ist.

9. Verfahren nach einem der vorangehenden Ansprüche, wobei die Mischung weiter Weichmacher in einer Konzentration zwischen 0,5 und 40 Gewichtsprozent, bevorzugt zwischen 1,0 und 10 Gewichtsprozent basierend auf dem Gesamtgewicht der Mischung aufweist.

10. Verfahren nach einem der vorangehenden Ansprüche, wobei die Düse eine Kreisform hat.

11. Verfahren nach Anspruch 10, wobei der Durchmesser der Düse zwischen 0,5 und 2 mm beträgt.

## Revendications

1. Procédé de production d'un matériau similicuir à partir de rebuts de production de cuir, comportant les étapes consistant à :
- couper lesdits rebuts en fibres en utilisant des moyens mécaniques,
- préparer un mélange d'un polymère thermoplastique et desdites fibres, dans lequel 5 à 70 parties en poids de fibres pour 100 parties en poids de polymère thermoplastique sont présentes,
- introduire ledit mélange dans une extrudeuse à double vis, dont l'extrémité présente une filière,
- chauffer ledit mélange dans ladite extrudeuse à double vis à une température entre 80 et 220 °C, lesdites vis étant co-rotatives et tournant à une vitesse entre 10 et 60 tr/min, de sorte que le polymère thermoplastique est fondu et ledit mélange est extrudé à travers ladite filière, et
- refroidir ledit mélange extrudé à la température ambiante, pour obtenir le matériau similicuir.

2. Procédé selon la revendication 1, dans lequel lesdites fibres ont une longueur de 0,1 à 5 mm.

3. Procédé selon l'une quelconque des revendications précédentes, dans lequel ledit mélange comprend en outre des plastifiants, des charges et/ou des additifs, en particulier des lubrifiants, des agents gonflants, des agents de nucléation, des stabilisants, des colorants, des pigments et des ignifugeants.

4. Procédé selon l'une quelconque des revendications précédentes, dans lequel ledit polymère thermoplastique est sélectionné dans le groupe constitué de polyuréthanes et de polycaprolactones.

5. Procédé selon l'une quelconque des revendications précédentes, dans lequel ladite extrudeuse présente une longueur entre 19 et 36 fois le diamètre extérieur des vis.

6. Procédé selon l'une quelconque des revendications précédentes, dans lequel l'étape consistant à couper lesdits rebuts en fibres prévoit l'utilisation uniquement de moyens mécaniques, à l'exclusion de moyens thermiques et chimiques.

7. Procédé selon la revendication 6, dans lequel lesdits moyens mécaniques réalisent un mouvement rectiligne alternatif.

8. Procédé selon l'une quelconque des revendications précédentes, dans lequel ledit mélange est exempt de caoutchouc.

9. Procédé selon l'une quelconque des revendications précédentes, dans lequel ledit mélange comprend en outre des plastifiants dans une concentration entre 0,5 et 40 % en poids, de préférence entre 1,0 et 10 % en poids, sur la base du poids total du mélange.

10. Procédé selon l'une quelconque des revendications précédentes, dans lequel ladite filière a une forme circulaire.

11. Procédé selon la revendication 10, dans lequel le diamètre de la filière est entre 0,5 et 2 mm.
